Europäisches Patentamt

(19) European Patent Office

Office européen des brevets

(11) Numéro de publication: **0 122 173 B1**

(12) **FASCICULE DE BREVET EUROPEEN**

(45) Date de publication du fascicule du brevet:
28.01.87

(51) Int. Cl.⁴: **D 06 B 9/00**

(21) Numéro de dépôt: **84400463.0**

(22) Date de dépôt: **08.03.84**

(54) **Procédé d'imprégnation en continu, par des polymères à l'état solide, de fibres de grande longueur, machine pour la mise en oeuvre de ce procédé et produits en résultant.**

(30) Priorité: **10.03.83 FR 8303938**

(43) Date de publication de la demande:
**17.10.84 Bulletin 84/42**

(45) Mention de la délivrance du brevet:
**28.01.87 Bulletin 87/5**

(84) Etats contractants désignés:
**AT BE CH DE FR GB IT LI LU NL SE**

(56) Documents cités:
**FR - A - 2 091 954**
**FR - A - 2 104 837**
**GB - A - 2 021 658**
**US - A - 2 877 501**

(73) Titulaire: **INSTITUT NATIONAL DE RECHERCHE CHIMIQUE APPLIQUEE, 18 Bis, Boulevard de la Bastille, F-75012 Paris (FR)**

(72) Inventeur: **Morel, Emile Maurice Jean, 60, rue de Fécamp, F-75012 Paris (FR)**
Inventeur: **Richert, Gabriel Maurice, 7, rue des Oliviers, F-91220 Bretigny-sur-Orge (FR)**
Inventeur: **Vizet, Maurice, 3, rue Lesage, F-91610 Ballancourt (FR)**
Inventeur: **L'Hernault, Claude André, 8 ter, Avenue du Général Leclerc, F-91590 La Ferte Aiais (FR)**

(74) Mandataire: **Rinuy, Santarelli, 14, avenue de la Grande Armée, F-75017 Paris (FR)**

## Déscription

La présente invention concerne un procédé d'imprégnation par des polymères thermoplastiques ou thermodurcissables à l'état solide de fibres de grande longueur, tels que fils, filaments, mèches et analogues (tous éléments dénommés ci-après «fibres»), ainsi que les moyens permettant de mettre en œuvre ce procédé.

On sait que la présence, en tant qu'élément de renforcement, de fibres continues, le plus souvent de verre ou de carbone, unidirectionnelles ou présentant une orientation préférentielle, permet d'obtenir des matériaux de haute tenue mécanique.

On connaît à l'heure actuelle des procédés pour imprégnation des fibres longues par des polymères. Dans le cas des résines thermodurcissables, le polymère est utilisé à l'état fondu ou mis en solution; dans le cas des thermoplastiques, le polymère est utilisé soit en solution, soit maintenu en lit fluidisé, soit en suspension dans l'eau ou sous forme de plastisol.

On notera que dans le cas de la technique d'imprégnation par des résines à l'état fondu, cette technique est rendue difficile en raison de la haute viscosité des résines utilisées, les fibrilles ont par ailleurs tendance à se rassembler et la pénétration à cœur du polymère se fait mal.

En outre, l'utilisation des polymères à l'état solide pose des problèmes particuliers. Les techniques utilisées pour les résoudre, et décrites uniquement pour les thermoplastiques, reposent en général sur l'entraînement à sec de polymère en poudre par les fibres de renforcement, soit directement à partir de la poudre en vrac, soit à partir de la poudre en lit fluidisè. Le contrôle des quantités entraînées est délicat et les irrégularités en résultant conduisent à des variations dans la qualité du matériau fini recherché.

Par ailleurs, de tels procédés, pour leur mise en œuvre pratique, nécessitent une granulométrie et une forme de grains régulière. Les produits doivent être non collants et non mottants; il faut une dimension optimale des grains en rapport avec les caractéristiques d'écoulement de chaque poudre, d'où une certaine rigidité d'emploi; chaque produit nécessite un réglage optimal.

Mais même dans le cas où ces conditions sont respectées, le taux de «prélèvement» du polymère au passage des fibres, dans le lit fluidisé est difficile à régler, comme signalé ci-dessus, ce qui rend difficile la maîtrise du taux de renforcement. Il faut par ailleurs signaler dans le cas de l'imprégnation par fluidisation, les difficultés dues aux phénomènes électrostatiques qui constituent une source d'instabilité.

On a également proposé des procédés d'imprégnation de fibres par passage de ces fibres dans une suspension, une dispersion ou une émulsion de résine, soit dans l'eau, soit dans un hydrocarbure insaturé ou un plastisol.

Ces procédés consistent en général, comme décrit par exemple dans le brevet français N° 2 104 837 à réaliser dans un liquide non aqueux, inerte et volatil, une suspension de concentration donnée de la poudre du polymère choisi, à faire passer en continu dans cette suspension, les fibres admises suivant une direction unique et préférentielle, à éliminer le liquide de suspension, à soumettre les fibres imprégnées obtenues à un traîtement thermique pour amener le polymère à l'état liquide ou pâteux.

Lorsque l'on a recours à des suspensions aqueuses, on constate que l'eau forme sur les fibres une couche résultant d'un phénomène d'adsorption qui est très difficile, sinon impossible, à éliminer, même par chauffage, ce qui contrarie l'adhérence fibres-résine. Il en résulte une diminution sensible de la résistance finale du matériau obtenu.

Le phénomène est encore amplifié si le polymère et (ou) la fibre (cas des fibres aramides) sont eux-mêmes hygroscopiques, ce qui nécessite des précautions particulières pour favoriser l'adhérence entre les fibres et la résine.

Lorsqu'il s'agit de suspensions, de dispersions ou d'émulsions en présence d'hydrocarbure, il est quasiment impossible de s'assurer de l'élimination totale de l'hydrocarbure, ce qui entraîne une porosité du composite final obtenu, d'où la chute de ses popriétés mécaniques.

La présence d'un agent mouillant, dispersant ou émulsifiant, auquel on fait souvent appel est également gênante; celui-ci se retrouve dans le composite final; il tient mal à la chaleur et il risque de se décomposer au cours de la fusion ultérieure de la résine.

On notera également le risque de réaction chimique ultérieure entre les composants mis en œuvre si ceux-ci n'ont pas un caractère «inerte» les uns par rapport aux autres.

On fera remarquer également que les techniques d'imprégnation connues utilisent généralement, dans le cas des résines en poudre, des polymères thermoplastiques. Le cas des polymères thermodurcissables n'est pas envisagé.

Or, la présente invention fournit un procédé d'imprégnation de fibres continues par une matière polymérique en poudre, qu'elle soit du type thermoplastique ou thermodurcissable, obviant à ces inconvénients. Ces fibres peuvent être naturelles ou synthétiques, organiques, minérales ou métalliques.

Ce procédé consiste à réaliser, dans un liquide inerte et volatil, en l'absence de tout autre agent du type mouillant, dispersant, émulsifiant et analogues, une suspension de concentration donnée de la poudre du polymère choisi, à faire passer en continu dans cette suspension les fibres admises suivant une direction unique et préférentielle, à séparer ces fibres pendant leur traversée de la suspension ou pendant leur temps de séjour dans celle-ci, le cas échéant, en leurs éléments ou filaments unitaires, de manière à exposer le maximum de la surface de chacun d'eux au contact de ladite suspension, à rassembler ces éléments ou filaments unitaires, de manière à maintenir entre eux et au sein des fibres quittant la suspension, une quantité donnée de poudre de polymère la mieux répartie possible, à éliminer le liquide de suspension par vaporisation, à soumettre les fibres imprégnées obtenues à un traîtement thermique pour amener le polymère à l'état liquide ou pâteux puis à admettre l'ensemble dans un poste de formage ou de préformage à l'effet d'obtenir un produit fini ou semi-fini au profil ou à la forme voulus, ce produit semi-fini pouvant à son tour servir, par application de techniques connues, à la réalisation de produits finis.

Suivant une caractéristique avantageuse, le liquide inerte et volatil servant à la mise en suspension du polymère est un liquide présentant une densité voisine de celle du polymère.

On citera, parmi les liquides pouvant convenir dans le cas de polymères présentant une densité comprise entre 0,9 et 1,5, les «solvants organiques» volatils tels que le trichlorofluoroéthane, le méthanol ou l'éthanol, seuls ou en mélange en proportions convenables.

Suivant une autre caractéristique avantageuse, on maintient constante, à une valeur prédéterminée, la concentration du polymère dans le liquide de suspension.

L'invention couvre également les produits semifinis ou finis à renfort unidirectionnel et matrice thermodurcissable ou thermoplastique.

Elle est applicable aussi à la réalisation de produits semi-finis ou finis à renfort mixte unidirectionnel et isotrope. En effet, suivant un mode de mise en œuvre possible du procédé tel que défini ci-dessus, on peut associer aux fibres unidirectionnelles, un matériau isotrope du type mat à fibres longues enchevêtrées, avant ou après imprégnation de ces fibres unidirectionnelles. Une telle association peut se faire en présentant ces fibres auf droit d'une bande continue du matériau isotrope ou entre deux bandes continues de ce dernier, à un stade quelconque de l'opération précédant la fusion. Une telle association peut se faire soit en présentant la nappe de fibres parallèlement à une bande continue du matériau isotrope, soit entre deux bandes de ces fibres, soit l'inverse: nappe de fibres unidirectionnelles entre deux bandes du matériau isotrope, ou toute autre combinaison intéressante de ces motifs.

D'autres caractéristiques et avantages de l'invention ressortiront plus clairement de la description qui va suivre correspondant, à titre d'exemple, au cas de fibres minérales de verre ou de carbone, faite en regard des dessins annexés sur lesquels:

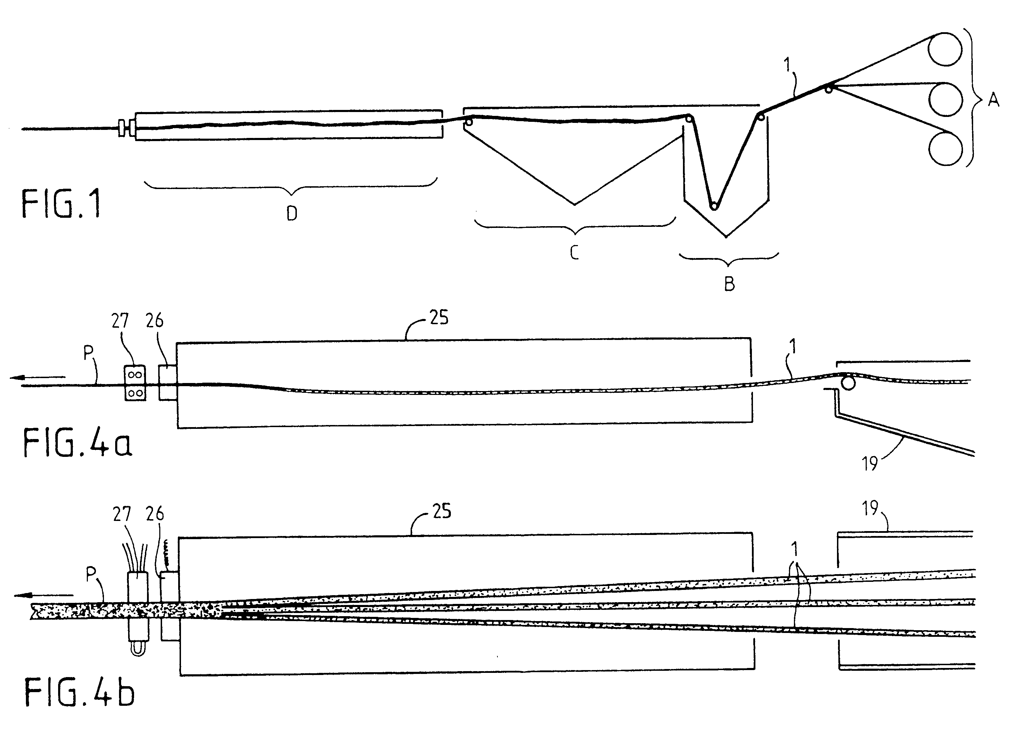

- la figure 1 est un schéma d'une installation mettant en œuvre le procédé de l'invention;

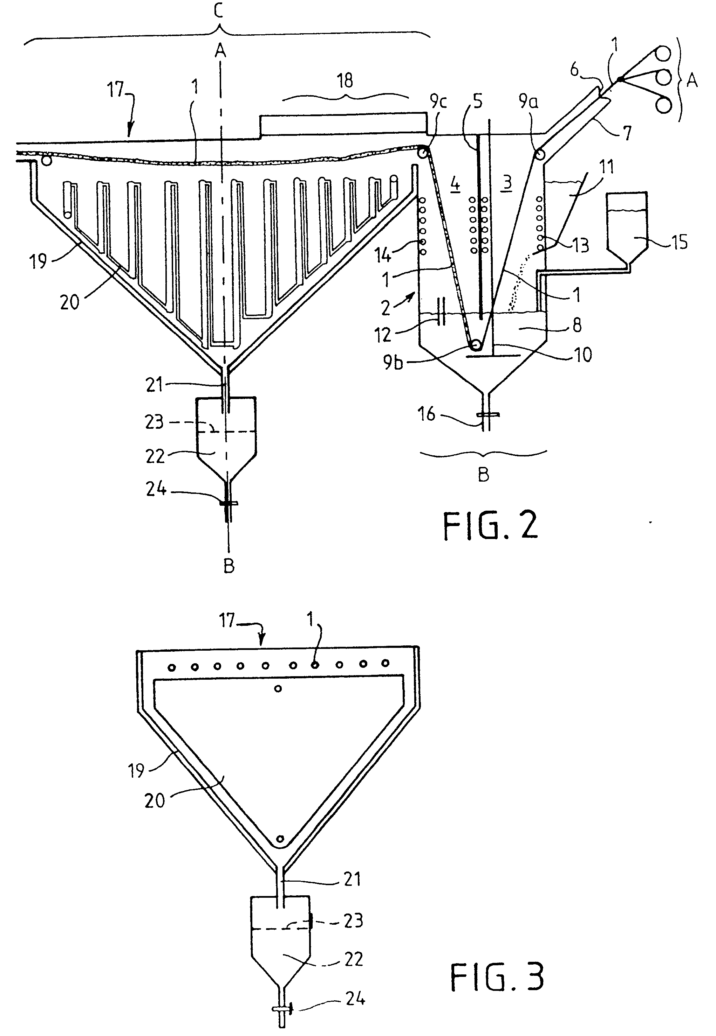

- la figure 2 est le schéma d'un mode de réalisation possible d'un poste «d'enduction» conforme à l'invention;

- la figure 3 est une vue en coupe suivant A–B de la figure 2, et,

- les figures 4a et 4b sont respectivement des figures en élévation et en plan montrant le cheminement de mèches constituées de fibres minérales enduites dans le poste de «traîtement thermique» avant admission dans le poste de «formage ou de préformage».

En se référant à ces dessins, une installation conforme à l'invention comporte essentiellement un poste (A) d'alimentation en continu d'une ou plusieurs mèches telles que 1, un poste d'enduction (B) qui sera décrit plus en détail ci-après, un poste de séchage (C) ainsi qu'un poste dit «de fusion» (D) qui seront également décrits ci-après.

Ainsi, une nappe de fibres (1), qui peut être constituée de mèches de fils parallèles, pénètre dans une enceinte (2) où s'effectue l'enduction (comprenant un certain nombre d'équipements). Cette enceinte est, par exemple, de forme parallèlépipédique terminée à sa base par une pyramide renversée munie à son extrémité d'un système de vidange (16). La partie inférieure est remplie de polymère en suspension, la partie supérieure est divisée en deux parties (3 et 4) par une paroi étanche (5) qui descend un peu au-dessous du niveau du liquide; cette paroi est destinée à empêcher l'entrée d'air dans le reste de l'appareil.

Cette nappe (1) pénètre dans la partie (3), par exemple par un orifice (6) de forme rectangulaire orienté obliquement vers le haut et raccordé à la chambre (3) par un tunnel (7) d'une longueur suffisante pour éviter la sortie des vapeurs du liquide de suspension.

L'orifice (6) peut être obturé par deux languettes souples disposées de part et d'autre de la nappe (1).

Les mèches de fibres unidirectionnelle sont délivrées par une série de bobines (A); elles sont maintenues à l'entrée la zone (3), au sein de la dispersion (8) et à la sortie de la zone (4), par des jeux de rouleaux libres cannelés (9a, 9b, 9c) qui permettent à la fois l'avance de la nappe sans frottement ni tension et le maintien d'un écart régulier entre les mèches.

Au passage au sein de la suspension de polymère (8), les fils constituant les mèches sont écartés les uns des autres, ce qui permet aux particules de polymère de pénétrer à cœur et de se trouver entraînées par l'avance de la nappe.

L'écartement des mèches est provoqué par un système d'agitation mécanique (10) ou autre moyen analogue de peignage qui se permet en même temps de maintenir les particules de polymère dispersées de façon homogène au sein du milieu de suspension.

Les mèches chargées de poudre mouillée remontent ensuite par la zone (4) jusqu'aux rouleaux de renvoi (9c) après lesquels elles pénètrent dans l'enceinte de séchage. Ces rouleaux, dont la vitesse d'entraînement est réglée pour exercer une traction sur les filaments écartés ont également pour rôle de les rapprocher et de reconstituer une nappe rappelant la nappe de départ (1).

La suspension de polymère (8) est constituée extemporanément par la dispersion de poudre de polymère dans un liquide non aqueux, à bas point d'ébullition, et inerte vis-à-vis du polymère et des fibres; les composés du type trichlorotrifluoroé- thane sont particulièrement convenables, leur densité étant assez voisine à celle des polymères techniques auxquels la machine est plus spécialement destinée.

Les grains de polymère sont dispersés au sein du liquide, simplement par l'action mécanique d'un agitateur sans addition d'agent dispersant ou émulsifiant; un des avantages du procédé est qu'il permet l'utilisation de polymères en poudre de granulométries très diverses et que la forme des grains n'est pas un facteur déterminant.

L'entraînement de polymère par la nappe (1) provoque un appauvrissement de la suspension qui est compensé par l'action d'un distributeur (11), un détecteur (12) permettant de maintenir la concentration du polymère constante en déclenchant la mise en marche du distributeur.

Le niveau du liquide tend à descendre progressivement sous l'effet de deux phénomènes: l'évaporation et l'entraînement par les fibres et la poudre mouillées.

L'évaporation est limitée par l'action de circuits réfrigérants (13 et 14) qui garnissent les parois des compartiments (3 et 4); pour accroître leur efficacité, ces circuits, comme l'ensemble des dispositifs de condensation de l'appareil, sont alimentés en fluide refroidi à une température voisine de 0 °C.

Quant au liquide mouillant les fibres et la poudre, il est récupéré dans le condenseur qui constitue la seconde enceinte de l'appareil. Par surcroît de précaution, le niveau de liquide est maintenu par une alimentation à niveau constant (15).

Enfin, l'enceinte d'enduction (2) peut être vidangée par le robinet (16) en cas de nettoyage ou de changement de polymère.

Au sortir de l'enceinte d'enduction (2), la nappe chargée de poudre de polymère pénètre dans l'enceinte de séchage (17) où le milieu de suspension est évaporé et récupéré.

L'évaporation se produit par passage sous une série d'éléments chauffants (18); la vapeur dense est recueillie dans l'enceinte (17) qui, dans le mode de réalisation illustré, est en forme de pyramide renversée et dont le volume est en rapport avec la quantité de vapeur formée. Cette vapeur se condense au contact des parois réfrigérées (19) et des éléments intérieurs (20) dans lesquels circule le même fluide que dans les éléments (13 et 14). Le liquide condensé se rassemble à la partie inférieure et s'évacue par l'orifice (21) de récupération.

Au fur et à mesure de l'avance, le liquide s'évapore, la poudre de polymère n'est plus fixée par capillarité sur les fibres, mais elle est seulement retenue par le réseau de fibrilles; une faible partie se détache et se rassemble avec le liquide condensé dans le séparateur (22), lequel est constitué par un récipient étanche divisé en deux compartiments par un tiroir horizontal supportant un élément filtrant (23) qui permet de séparer la poudre et de récupérer le liquide condensé par un robinet (24).

Comme cela a déjà été mentionné, la suspension de polymère est réalisée au moment de la mise en route de l'appareil, son volume et sa concentration étant régulés par le jeu de l'alimentation en liquide à niveau constant (15) et du détecteur (12) qui agit sur le distributeur de poudre (11) au fur et à mesure des besoins. Les fibres se chargent en polymère par entraînement mécanique au cours de leur passage au sein de la suspension.

Le taux de matière entraînée dépend d'une série de facteurs tels que:
 – la granulométrie du polymère;
 – la concentration de la suspension;
 – la vitesse de passage;
 – la tension des mèches.

Pour un produit donné en poudre, seuls les trois derniers sont susceptibles d'être modifiés en cours d'opération. En pratique, vitesse et tension sont maintenues constantes et le réglage par approximations successives de la concentration à une valeur qui sera maintenue fixe permet d'obtenir un rapport fibres-polymère quasi constant.

A la sortie de l'appareil, l'ensemble fibres-polymère pénètre dans un appareil de chauffage (25) où le polymère est amené à sa température de fusion ou de ramollissement, puis passe dans un jeu de filières successivement chaude et froide (26–27) où la matière est compactée et régulièrement répartie, et amenée au profil désiré, puis figée dans ce profil.

Le réglage de l'enduction par enrichissement progressif en polymère permet d'arriver à un régime stationnaire où la quantité de polymère est juste suffisante pour emplir le profil de la filière avec un reflux de matière minimum.

Une variante du procédé de compactage peut être constituée par l'utilisation de jeux de rouleaux presseurs à écartements réglables, successivement chauds, puis froids, utilisables en particulier pour la réalisation de semi-produits à section plane à matrice thermodurcissable.

Exemples de fabrication réalisées avec l'appareillage d'enduction selon l'invention

1. Semi-produit sous forme de jonc cylindrique de 3 mm de diamètre, constitué d'une matrice de polyéthylène téréphtalate et d'un renfort de 3 mèches de fibres de carbone comportant chacune 10 000 brins. Une plaque moulée à partir de morceaux de jonc disposés parallèlement et comprimés après fusion du polymère possède une résistance à la flexion de 1200 MPa à température ambiante et 600 MPa à 80°, les modules étant respectivement de 81 000 et 72 000 MPa; le taux de renforcement est de 48% en volume du composite.

2. Profilés de formes rectangulaires de différentes sections: le tableau ci-après rassemble quelques exemples de propriétés mesurées directement sur des profilés rectantulaires constitués de différentes matrices thermoplastiques armées de fibres de verre E ou de fibres de carbone unidirectionnelles.

| Nature du renfort | Polymère | Taux de renfort % en volume | Section du profilé mm × mm | Densité | Résistance à la flexion | | | |
|---|---|---|---|---|---|---|---|---|
| | | | | | Contraintes maxi MPa à 20° | à 80° | Modules MPa à 20° | à 80° |
| Verre E | PETP* | 40 | 20 × 2 | 1,80 | 600 | 310 | 23.000 | 21.500 |
| Verre E | PBTP | 33,2 | 10 × 4 | 1,74 | 610 | 245 | 25.000 | 16.400 |
| Carbone | PETP | 28 | 20 × 2 | 1,47 | 530 | 265 | 40.000 | 33.000 |
| Carbone | PETP | 30,5 | 10 × 4 | 1,44 | 500 | 280 | 39.500 | 23.000 |
| Verre E | PA-6.6 | 42,2 | 20 × 2 | 1,65 | 560 | 220 | 24.000 | 22.000 |
| Verre E | PA-6.6 | 40 | 10 × 4 | 1,70 | 600 | 195 | 26.000 | 15.000 |
| Verre E | PP | 41 | 20 × 2 | 1,55 | 290 | 80 | 23.000 | 14.000 |

Abréviations:
PETP: polyéthylène téréphtalate
PBTP: polybutylène téréphtalate
PA-6.6: polyamide 6.6.
PP: polypropylène

3. Un produit à renfort unidirectionnel et matrice thermodurcissable, constitué d'une matrice phénolique du type novolaque commercial en poudre fine et d'un renfort de fibres de verre E sous forme de ruban plat de 20mm × 2mm ou la résine est prépolymérisée par chauffage au cours du processus. Après moulage dans des conditions analogues à l'exemple 1 et la cuisson de résine, les caractéristiques des composites obtenus étaient les suivantes pour trois taux de renforcement:

| Taux de fibres en volume | Résistances en flexions | | | |
|---|---|---|---|---|
| | Contraintes MPa à 20° | à 150° | Modules MPa à 20° | à 150° |
| 18,5 | 530 | — | 16.400 | — |
| 34,0 | 830 | 720 | 27.000 | 25.000 |
| 38,7 | 960 | — | 29.000 | — |

4. Composites à renfort unidirectionnel moulés à partir de semi-produits selon l'exemple 1 ou l'exemple 3, à matrices thermostables thermoplastiques ou thermodurcissables.

| Matrice | Renfort | Taux de renfort % en volume | Propriétés en flexions | | | | | | | |
|---|---|---|---|---|---|---|---|---|---|---|
| | | | Contraintes maxi MPa 20° | 80° | 130° | 250° | Modules MPa 20° | 80° | 130° | 250° |
| Poly-sulfone | Carbone | 52 | 1200 | 1000 | 650 | — | 94 500 | 87 000 | 71 000 | — |
| P.S.P.* | Carbone | 60–65 | 1500 | — | — | 1200 | 91 000 | — | — | 90 000 |
| P.S.P.* | Verre R | 65 | 1800 | — | — | 1200 | — | — | — | — |
| Epoxy thermo-stable | Carbone | 60 | 1600 | — | 1650 | — | 115 000 | — | 119 000 | — |

* Polystyryl pyridine

5. Profilés à renfort mixte unidirectionnel, isotrope: la machine décrite est également utilisable pour la production en continu de profilés avec adjonction au renfort unidirectionnel d'un renfort isotrope, par exemple un mat à fibres continues enchevêtrées assurant la rigidité transverse de l'ensemble. Un tel mat peut être admis en même temps que les fibres unidirectionnelles (au poste d'admission A) sous forme de bande continue présentée d'un côté ou de part et d'autre du faisceau desdites fibres unidirectionnelles. On règle alors dans la suite des opérations l'apport de la quantité de polymère nécessaire à l'enduction du mat isotrope de toute manière appropriée.

Elle est également applicable à la production de profils ouverts du type cornière U ou I, cette liste n'étant pas limitative, dont la tenue dans le sens transversal peut être également améliorée par l'adjonction d'un renfort isotrope.

L'invention convient de même à la production de profils fermés circulaires ou polygonaux ainsi qu'à la fabrication de semi-produits sous forme de rubans minces ou de joncs utilisables pour la réalisation de structures bobinées.

Il est à signaler que les produits obtenus selon l'invention présentent la caractéristique supplémentaire d'avoir une porosité inférieure à 2%, cette porosité étant calculée en appliquant la formule:

$$P = 100 - d_c \left( \frac{V_F}{d_F} + \frac{V_P}{d_P} \right)$$

où $d_c$ est la densité du composite, mesurée expérimentalement

$V_F$ est le taux de fibres en volume pour cent du composite

$V_P$ est le taux du polymère en volume pur cent du composite

$d_F$ est la densité des fibres

$d_P$ est la densité du polymère.

Il va de soi que la présente invention n'a été décrite qu'à titre purement explicatif et nullement limitatif et que toute application utile pourra y être apportée sans sortir de son cadre.

## Revendications

1. Procédé d'imprégnation de fibres continues, naturelles ou synthétiques, organiques, minérales ou métalliques, au moyen d'une matière polymérique se présentant sous la forme d'une suspension dans un liquide non aqueux, inerte et volatil en faisant passer ces fibres dans ladite suspension, suivant une direction unique et préférentielle puis en éliminant le liquide de suspension et en soumettant les fibres ainsi imprégnées à un traitement thermique pour maintenir le polymère à l'état liquide ou pâteux, procédé caractérisé par le fait que la matière polymérique est une poudre du type thermoplastique ou thermodurcissable de granulométrie quelconque, que la suspension de cette poudre dans le liquide non aqueux, inerte et volatil est réalisée avec une concentration donnée de cette poudre en l'absence de tout autre agent du type mouillant, dispersant, émulsifiant et analogues et que le passage en continu des fibres dans cette suspension est accompagné de leur séparation pendant leur traversée ou pendant la durée de séjour dans cette suspension, en leurs éléments ou filaments unitaires, de manière à exposer le maximum de la surface de chacun d'eux au contact de ladite suspension, ces éléments ou filaments unitaires étant ensuite rassemblés de manière à maintenir entre eux et au sein des fibres quittant la suspension une quantité donnée de poudre de polymère la mieux répartie possible, le liquide de suspension étant enfin éliminé avant de soumettre les fibres imprégnées obtenues à un traitement thermique pour amener ledit polymère à l'état liquide ou pâteux et avant admission de l'ensemble dans un poste de formage ou de préformage à l'effet d'obtenir le produit fini ou semi-fini désiré au profil ou à la forme voulus pouvant servir à la réalisation de produits finfis.

2. Procédé selon la revendication 1, caractérisé par le fait qu'on maintient constante, à une valeur prédéterminée, la concentration du polymère dans le liquide de suspension.

3. Procédé selon la revendication 1 ou 2, caractérisé par le fait que le liquide non aqueux, inerte et volatil, présente une densité voisine de celle de la matière polymérique.

4. Procédé selon l'une quelconque des revendications 1 à 3 pour l'obtention de produits semi-finis ou finis à renfort unidirectionnel et matrice thermodurcissable ou thermoplastique.

5. Procédé selon l'une quelconque des revendications 1 à 3, caractérisée par le fait que les fibres (1) sont admises en association avec au moins une bande continue d'un matériau fibreux isotrope à fibres enchevêtrées pour l'obtention de produits semi-finis ou finis à renfort mixte unidirectionnel et isotrope et matrice thermodurcissable ou thermoplastique.

## Patentansprüche

1. Verfahren zum Beschichten von kontinuierlichen, natürlichen oder synthetischen, organischen, mineralischen oder metallischen Fasern mittels einer polymeren Masse, die sich in Form einer Suspension in einer nichtwässrigen, inerten und flüchtigen Flüssigkeit darbietet, wobei die Fasern durch die Suspension in einer einzigen Richtung geführt werden und wobei vorzugsweise die Suspensions-Flüssigkeit nachher entfernt und die so beschichteten Fasern einer thermischen Behandlung unterworfen werden, um das Polymer im flüssigen oder pastosen Zustand zu erhalten, dadurch gekennzeichnet, dass die polymere Masse ein Pulver des thermoplastischen oder warmaushärtenden (duroplastischen) Typs mit beliebiger Körnung ist, dass die Suspension des Pulvers in der nichtwässrigen, inerten und flüchtigen Flüssigkeit mit einer bestimmten Konzentration verwirklicht wird, die das Pulver in Abwesenheit von jedem anderen Agens wie einem Netz-, Dispergier-, Emulgier- und analogen Mittel zulässt und dass der kontinuierliche Durchtritt der Fasern durch die Suspension von ihrer gegenseitigen Trennung während des Durchlaufs oder der Dauer ihres Aufenthalts in der Suspension in ihre Elemente oder Einzelfäden begleitet ist, derart, dass die grösstmögliche Oberfläche jedes derselben der Berührung mit der Suspension ausgesetzt wird, wobei die Elemente oder Einzelfäden nachfolgend wieder derart vereinigt werden, dass sie zwischen sich und im Inneren der die Suspension verlassenden Fasern eine bestimmte Menge des polymeren Pulvers halten unter bestmöglicher Verteilung, wobei die Flüssigkeit der Suspension schliesslich entfernt wird, bevor die erhaltenen beschichteten Fasern einer Wärmebehandlung unterzogen werden, um das Polymer in den flüssigen oder pastosen Zustand zu bringen und vor dem Eintreten der Gesamtheit an eine Formungs- oder Verformungs-Stelle, um das erwünschte End- doer Halbfertig-Produkt zu erhalten mit dem erwünschten Profil oder der erwünschten Form, die zur Herstellung der Endprodukte dienen kann.

2. Verfahren nach Anspruch 1, dadurch gekennzeichnet, dass die Konzentration des Polymers in der Suspensionsflüssigkeit konstant auf einem vorbestimmten Wert gehalten wird.

3. Verfahren nach Anspruch 1 oder 2, dadurch gekennzeichnet, dass die nichtwässrige, inerte und flüchtige Flüssigkeit eine Dichte in der Nähe der Dichte der polymeren Masse zeigt.

4. Verfahren nach einem der Ansprüche 1 bis 3 zur Erzielung von Halbfertig- oder Endprodukten mit Verstärkung in einer Richtung und einer warmaushärtenden (duroplastischen) oder thermoplastischen Matrix.

5. Verfahren nach einem der Ansprüche 1 bis 3, dadurch gekennzeichnet, dass die Fasern (1) in einer Vereinigung aus mindestens einem kontinuierlichen Band aus isotropem Fasermaterial mit verwirrt gelegten Fasern zugeführt werden zur Erzielung von Halbfertig- oder Endprodukten mit isotroper und gleichzeitig in einer Richtung vorhandener Verstärkung und mit warmaushärtender (duroplastischer) oder thermoplastischer Matrix.

## Claims

1. Process for coating natural or synthetic, organic, inorganic or metallic continuous fibres, by means of a polymeric substance which is in the form of a suspension in a non-aqueous, inert and volatile liquid by passing these fibres in the said suspension, along a single preferential direction and then removing the suspension liquid and subjecting the fibres thus coated to a chemical treatment for maintaining the polymer in a liquid or pasty state, process characterized in that the polymeric substance is a thermoplastic or thermosettable type of powder of any particle size, in that the suspension of this powder in the non-aqueous, inert and volatile liquid is carried out with a given concentration of this powder in the absence of any other agent of the wetting, dispersing, emulsifying and similar types and in that the continuous passage of fibres in this suspension is accompanied by their separation during their passage or during the period of their residence in this suspension, into their components or into single filaments, so as to expose the maximum surface area of each of them to contact with the said suspension, these components or single filaments then being assembled so as to maintain between one another and within the fibres leaving the suspension a given quantity of polymer powder distributed in the best possible way, the suspension liquid being finally removed before the coated fibres obtained are subjected to a thermal treatment in order to bring the said polymer to a liquid or pasty state and before the whole is introduced into a forming or preforming station with a view to obtaining the finished or semi-finished product sought with the desired outline or shape which can be used for the manufacture of the finished products.

2. Process according to claim 1, characterized in that the polymer concentration in the suspension liquid is maintained constant at a predetermined value.

3. Process according to claim 1 or 2, characterized in that the non-aqueous, inert and volatile liquid has a density close to that of the polymeric substance.

4. Process according to any one of claims 1 to 3 for the production of semi-finished or finished products with unidirectional reinforcement and thermosettable or thermoplastic matrix.

5. Process according to any one of claims 1 to 3, characterized in that the fibres (1) are introduced in combination wiht at least one continuous strip of an isotropic fibrous material with entangled fibres for the production of semi-finished or finished products with mixed unidirectional and isotropic reinforcement and with thermosettable or thermoplastic matrix.

FIG.1

FIG.4a

FIG.4b

0122173

FIG. 2

FIG. 3